## Europäisches Patentamt
## European Patent Office
## Office européen des brevets

(19)

(11) Numéro de publication: **0 184 487 B1**

(12)

# FASCICULE DE BREVET EUROPEEN

(45) Date de publication du fascicule du brevet:
**31.05.89**

(51) Int. Cl.⁴: **G02F 1/133**

(21) Numéro de dépôt: **85402185.4**

(22) Date de dépôt: **12.11.85**

(54) Dispositif pour le dépôt d'une couche d'orientation d'une cellule à cristal liquide.

(30) Priorité: **22.11.84 FR 8417794**

(43) Date de publication de la demande:
**11.06.86 Bulletin 86/24**

(45) Mention de la délivrance du brevet:
**31.05.89 Bulletin 89/22**

(84) Etats contractants désignés:
**CH DE GB IT LI NL**

(56) Documents cités:
**DE-A- 2 605 690**
**DE-A- 2 817 348**
**FR-A- 2 357 920**

**PATENTS ABSTRACTS OF JAPAN,**
**vol. 2, no. 1, 5 janvier 1978, page 9551 E 77 & JP - A**
**- 52 115 244**
**JAPANESE JOURNAL OF APPLIED PHYSICS,**
**vol. 21, no. 12, partie 2, décembre 1982, pages**
**L761-L763, Tokyo, JP; K. HIROSHIMA: "Controlled**
**high-tilt-angle nematic alignment compatible with glass**
**frit sealing"**

(73) Titulaire: **COMMISSARIAT A L'ENERGIE ATOMIQUE,**
**31/33, rue de la Fédération, F-75015 Paris(FR)**

(72) Inventeur: **Duchene, Jacques, Chemin du Mas,**
**F-38330 St Ismier(FR)**

(74) Mandataire: **Mongrédien, André et al, c/o**
**BREVATOME 25, rue de Ponthieu, F-75008 Paris(FR)**

ACTORUM AG

## Description

La présente invention a pour objet un dispositif pour le dépôt d'une couche d'orientation d'une cellule à cristal liquide.

Les cellules à cristal liquide sont utilisées notamment dans les systèmes d'affichage pour montres, calculateurs, appareils de mesure, en péri-informatique pour la visualisation de caractères alphanumériques, ou encore dans le traitement optique de signaux électriques.

Au sein du cristal liquide, les molécules sont en général orientées perpendiculairement aux parois de la cellule en l'absence de champ électrique créé entre les électrodes. Une telle orientation est dite homéotrope. Lorsque les électrodes sont portées à un potentiel électrique, il apparaît un champ électrique au sein du cristal liquide. Ce champ électrique provoque le basculement des molécules qui s'orientent parallèlement aux parois de la cellule. Si, avant l'application du champ électrique, les molécules de cristal liquide ont une orientation homéotrope, sous l'action d'un champ électrique, elles basculent indifféremment de manière à être parallèles ou anti-parallèles à une direction contenue dans le plan des parois de la cellule. L'apparition de zones de basculement inverse, séparées des zones de basculement correct par des lignes de discontinuité, perturbe gravement l'aspect de l'afficheur.

Cette indétermination sur le sens de basculement des molécules de cristal liquide peut être levée si, au voisinage des parois, les molécules de cristal liquide possèdent, en l'absence d'un champ électrique, une orientation quasi-homéotrope, l'angle que font les molécules de cristal liquide avec la normale aux parois étant faible, par exemple compris entre 1° et 10°. Lors de l'application du champ électrique, les molécules de cristal liquide basculent alors dans le même sens; les zones de basculement inverse disparaissent.

On connaît de nombreuses méthodes pour obtenir une orientation quasi-homéotrope des molécules de cristal liquide d'une cellule. Ces procédés concernent des traitements de l'état de surface des parois internes des faces de la cellule. Dans la suite du texte, le terme "substrat" désignera l'une des parois de la cellule et le terme "la surface du substrat" désignera la face interne de chaque paroi de la cellule en contact avec le cristal liquide.

Pour traiter une surface de substrat, l'homme de l'art utilise un procédé qui consiste en un dépôt sur la surface du substrat, par évaporation oblique, d'un matériau tel que SiO suivi d'un traitement homéotrope par un agent de surface tel qu'un surfactant organique.

Le procédé est notamment décrit dans l'article "Large-area quasihomeotropic orientation of liquide crystal and its application to guest-host positive display" de Nobuyoski Koshida paru dans Journal of Applied Physics, n° 59-9, septembre 1981, pp 5534-5536.

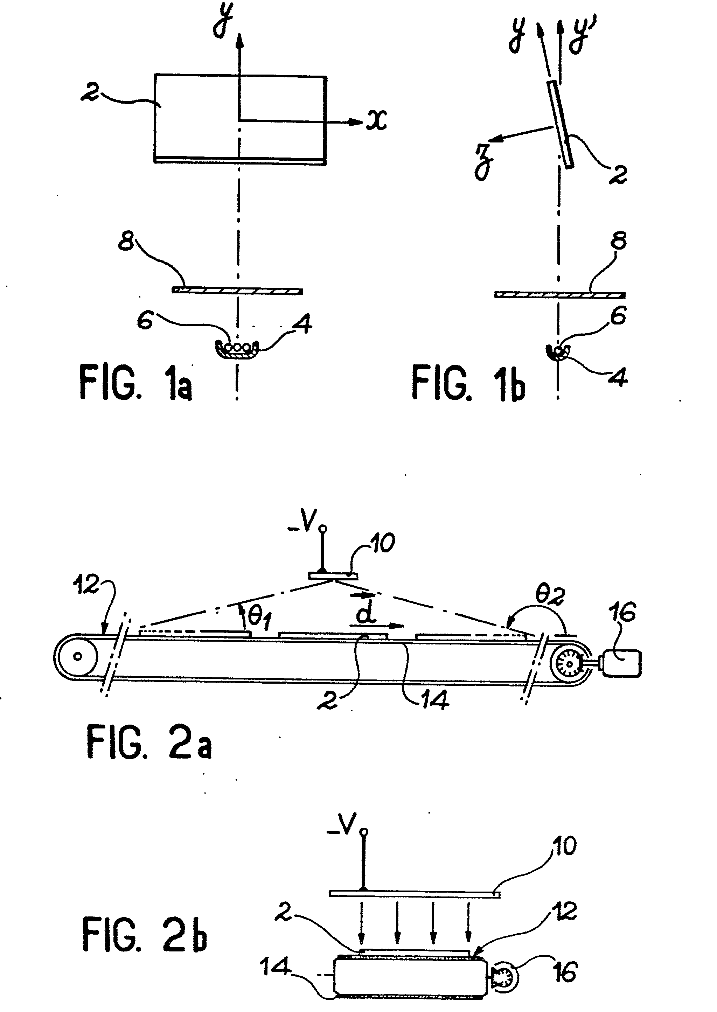

Les figures 1a et 1b représentent de façon schématique un dispositif pour la mise en oeuvre de la première étape de ce procédé connu. La figure 1a est une vue du dispositif dans un plan parallèle au plan du substrat 2 tel que le plan xy et la figure 1b est une vue du même dispositif dans un plan perpendiculaire à l'axe x. Les axes x et y sont pris parallèles aux côtés du substrat 2 et se coupent en son centre.

La source d'évaporation comprend un récipient 4 de forme allongée et étroite, de l'ordre de 40 mm de long pour 3 mm de large, contenant des grains 6 de SiO de diamètre d'environ 2 mm et disposé sur une seule ligne sur toute la longueur du récipient 4. Celui-ci est placé dans le plan xy' à environ 40 cm du substrat. L'angle entre les directions y et y' est de l'ordre de quelques degrés. La source d'évaporation comprend également des moyens (non représentés) pour évaporer les grains 6 de SiO. Le dispositif comprend enfin un obturateur 8 qui permet de contrôler la durée d'exposition du substrat 2 à la source d'évaporation.

La deuxième étape du procédé est de manière classique le dépôt d'un agent de surface. On peut citer parmi les agents actifs de surface (surfactants), la résine polyamide Versamide 100 et la lécithine pour les composés hydrocarbonés, ou le polytétrafluoréthylène (PTFE) pour les composés fluorocarbonés, et parmi les agents de couplage de surface, les organosilanes tels que DMOAP polymérisé. Tous ces composés sont connus et utilisés par l'homme de l'art.

Dans la première étape de ce procédé connu, on dépose une couche d'orientation par évaporation sous vide sous incidence oblique. On connaît également des procédés où l'on dépose une couche sous plusieurs angles d'évaporation différents. Dans la demande de brevet DE-A-2605690 déposée le 13 février 1976 au nom de BBC AG, on utilise deux angles d'évaporation perpendiculaires entre eux, une première couche étant déposée sous un premier angle d'évaporation, puis une seconde couche sous un second angle d'évaporation. Dans la demande de brevet DE-A-2817348 déposée le 20 avril 1978 au nom de CITIZEN WATCH Co, Ltd, on utilise simultanément deux angles d'évaporation coplanaires.

Dans chacun de ces procédés connus, les angles d'évaporation sont fixes et leurs valeurs résultent d'un choix judicieux par l'homme de l'art en fonction de nombreux paramètres.

Le procédé de dépôt par évaporation sous vide utilisé dans ces méthodes connues n'est pas sans inconvénient. Il faut tout d'abord concilier le caractère sensiblement ponctuel d'une telle source avec le désir d'avoir un angle d'évaporation identique en tout point du substrat. Ceci conduit à disposer la source à grande distance du substrat (40 cm dans l'exemple des figures 1a et 1b), donc à augmenter l'encombrement du dispositif d'évaporation sous vide. Ceci limite également la taille des substrats qui peuvent être traités, car à partir d'une certaine dimension du substrat, l'angle d'évaporation ne peut être maintenu identique en tous les points de ce substrat. Ainsi, il n'est pas facile de traiter par évaporation sous vide des substrats dont les dimensions excèdent 200 mm.

Par ailleurs, l'évaporation sous vide se prête mal à une production de substrats en grande série. On sait, en effet que la couche d'orientation doit avoir une épaisseur minimale de l'ordre de 150 mm. On sait également que l'épaisseur de la couche d'orientation croît d'autant plus rapidement que la direction d'évaporation est proche de la normale au substrat. Or, le dépôt de la couche d'orientation se fait sous une incidence importante, l'angle entre la normale au substrat et la direction d'évaporation étant compris entre 60 et 80°; l'épaisseur de la couche déposée croît donc lentement.

Le procédé est encore ralenti par les manipulations nécessaires au positionnement de chaque substrat devant la source d'évaporation et par le fait que l'autonomie de la source d'évaporation est faible, celle-ci devant être rechargée environ toutes les heures.

L'invention a pour but le dépôt d'une couche d'orientation sur un substrat pour induire une orientation quasi-homéotrope des molécules d'un cristal liquide palliant les inconvénients des techniques connues.

Elle a pour objectif la production de tels substrats à un débit élevé. Elle a également pour objectif le traitement de substrats de grande dimension, par exemple supérieur à 300 mm.

L'invention consiste d'une part à remplacer la source d'évaporation sous vide par une source de pulvérisation cathodique et d'autre part à déposer la couche d'orientation sous une incidence variant continûment, l'intervalle de variation de l'angle d'incidence contenant l'incidence normale.

L'utilisation de la pulvérisation cathodique présente deux avantages essentiels: premièrement, la source n'est plus ponctuelle mais étendue, ce qui permet de traiter des substrats de grande dimension; deuxièmement, l'autonomie de cette source est très supérieure à celle d'une source d'évaporation sous vide, ce qui limite les arrêts du dispositif et accélère le débit de production des substrats.

Un autre avantage réside en ce que la pulvérisation cathodique permet un meilleur contrôle de la matière déposée tant du point de vue de la quantité de la matière déposée que de sa pureté.

Le deuxième élément de l'invention, à savoir le dépôt de la couche d'orientation sous une incidence variant continûment, permet d'atteindre un débit compatible avec une production en grande série par le défilement d'un train de substrats sous la source de pulvérisation.

Il faut noter que le dépôt de la couche d'orientation sous une incidence variant entre deux angles disposés de part et d'autre de la normale se démarque totalement de l'art antérieur dans lequel l'(les) angles(s) d'évaporation est (sont) fixe(s) et choisi(s) de manière précise par l'homme de l'art en fonction de divers paramètres.

De manière précise, l'invention a pour objet un dispositif de dépôt d'une couche d'orientation sur le substrat d'une cellule à cristal liquide, pour induire une orientation quasi-homéotrope des molécules de cristal liquide comprenant un support linéaire plan apte à recevoir un ensemble de substrats alignés suivant un axe d'alignement et une source de pulvérisation cathodique disposée au-dessus dudit support et centrée sur ledit axe d'alignement, lesdits substrats et ladite source étant animés d'un mouvement relatif de translation suivant ledit axe d'alignement pendant le dépôt de la couche d'orientation, ledit mouvement faisant varier continûment l'angle d'incidence des particules déposées en chaque point d'un substrat dans un intervalle contenant l'incidence normale.

De manière préférée, la source de pulvérisation cathodique est étendue dans une direction parallèle au plan du support et perpendiculaire à l'axe d'alignement. La dimension de la source suivant cet axe perpendiculaire à l'axe d'alignement est au moins égal à la dimension des substrats suivant cet axe.

De manière préférée, le mouvement relatif de translation est continu et à vitesse constante.

Selon un mode de réalisation avantageux, la source de pulvérisation cathodique est fixe et le dispositif comprend un tapis roulant sur lequel sont disposés les substrats.

Selon un autre mode de réalisation avantageux, les substrats sont fixes et la source de pulvérisation cathodique est animée d'un mouvement de translation.

Les caractéristiques et avantages de l'invention apparaîtront mieux après la description qui suit, d'exemples de réalisation donnés à titre explicatif et nullement limitatif, en référence aux dessins annexés sur lesquels :

- les figures 1a et 1b, déjà décrites, représentent de façon schématique un dispositif connu pour le dépôt d'une couche d'orientation sur une paroi de cellule à cristal liquide, afin d'obtenir un alignement quasi-homéotrope des molécules de cristal liquide,
- les figures 2a et 2b représentent respectivement une vue de face et une vue de côté du dispositif de l'invention pour le dépôt d'une couche d'orientation sur une paroi de cellule à cristal liquide, afin d'obtenir un alignement quasi-homéotrope des molécules de cristal liquide,
- la figure 3 représente schématiquement, en coupe, un substrat recouvert d'une couche d'orientation déposée au moyen du dispositif de l'invention,
- la figure 4 représente schématiquement une coupe d'une cellule à cristal liquide obtenue au moyen du dispositif de l'invention montrant l'orientation quasi-homéotrope des molécules de cristal liquide.

On a représenté sur les figures 2a et 2b un dispositif selon un mode de réalisation de l'invention, respectivement en vue de face et en vue de côté.

Ce dispositif comprend essentiellement une source 10 du corps à déposer, le dépôt se faisant par pulvérisation cathodique, et un tapis roulant 12 dont la bande supérieure forme un support 14 linéaire plan apte à recevoir un ensemble de substrats 2 alignés. La source 10 est disposée en regard des substrats alignés; elle est centrée sur l'axe d'alignement des substrats.

On connaît les dispositifs de pulvérisation cathodique. Un tel dispositif comprend une enceinte emplie d'un gaz inerte, par exemple l'argon, sous une pression de l'ordre de 0,01 mmHg. Par application d'une haute tension, on crée une décharge entre une cathode, constituée par la source 10 et une anode. Cette décharge produit l'ionisation du gaz neutre et les ions formés viennent frapper la cathode, provoquant l'arrachement des molécules de la source. Ces molécules ont alors une vitesse suffisante pour atteindre le substrat et s'y déposer.

Ce dispositif étant bien connu de l'homme de l'art et sa représentation n'étant pas nécessaire à la compréhension de l'invention, on a simplement indiqué sur les figures 2a et 2b la source 10 du corps à déposer sur laquelle sont précipités les ions du gaz inerte. Il est clair toutefois que l'ensemble du dispositif représenté sur les figures 2a et 2b est contenu dans une enceinte emplie d'un gaz inerte.

Dans le mode de réalisation représenté sur les figures 2a et 2b, la source 10 est fixe et les substrats défilent devant ladite source, entraînés par le moteur 16 du tapis roulant 12. Ce défilement est fait de préférence en continu à une vitesse constant.

Bien entendu, un dispositif comprenant une source mobile en translation devant un ensemble de substrats fixes constitue également un mode de réalisation conforme à l'invention.

Le dispositif de l'invention réalise le dépôt d'une couche d'orientation sous un angle d'incidence variant continûment au cours du dépôt en chaque point du substrat. Cet angle, mesuré entre la direction de défilement ● et la direction d'incidence des particules issues de la source, varie d'un angle $\theta_1$, inférieur à 90°, à un angle $\theta_2$, supérieur à 90°.

La valeur de l'angle $\theta_1$, peut être quelconque dans l'intervalle [0°,90°]; en pratique, une valeur de quelques degrés peut être retenue. De même, la valeur de l'angle $\theta_2$ peut être quelconque dans l'intervalle [90°,180°]; en pratique une valeur de près de 180° peut être retenue. Il est important de noter qu'à la différence des procédés connus, il n'est pas nécessaire de choisir ici des angles d'incidences précis, ce qui simplifie le dispositif de dépôt de la couche d'orientation (moins d'éléments, réglages supprimés, ...). De plus, le dépôt selon l'invention d'une couche d'orientation sous une incidence variable, traversant l'incidence normale, s'écarte totalement des procédés connus dans lesquels l'angle d'incidence est fixe.

Le demandeur a déposé une couche d'orientation sur un substrat au moyen d'un dispositif confirme aux figures 2a et 2b et a constaté, après avoir déposé un surfactant dans une étape ultérieure, que les molécules de cristal liquide déposées sur ce substrat avaient une orientation quasi-homéotrope.

Bien que le mécanisme du dépôt de la couche d'orientation soit mal compris, on peut cependant avancer l'explication que les particules déposées sous incidence sensiblement normale contribuent pour environ 90% à l'épaisseur de la couche et que les particules déposées sous les autres incidences contribuent seulement pour environ 10% à l'épaisseur de la couche mais sont à l'origine de la texture de la couche qui induit l'orientation des molécules de cristal liquide.

Les paramètres essentiels de réglage du dispositif sont la vitesse de défilement des substrats relativement à la source et la puissance de ladite source. On sait en effet que la couche d'orientation doit avoir une épaisseur minimale, de l'ordre de 150 nm, pour que l'adsorption du surfactant déposé dans l'étape suivante soit suffisante. En général, on dépose une couche dont l'épasseur est comprise entre 150 et 750 nm.

Le dispositif de l'invention présente l'avantage par rapport aux dispositifs connus, de se prêter à une production en grande série. Ceci est rendu possible d'une part par le défilement continu des substrats devant la source et, d'autre part, par l'utilisation d'une source de pulvérisation cathodique dont l'autonomie est très supérieure à celle d'une source d'évaporation.

Enfin, le procédé de dépôt de la couche d'orientation est considérablement accéléré dans l'invention car une grande partie de l'épaisseur de cette couche est déposée sous incidence sensiblement normale, où la vitesse de croissance est importante, alors que dans les procédés connus la totalité de la couche d'orientation est déposée sous une incidence fixe sensiblement rasante, où la vitesse de croissance est faible.

On peut également ajouter que le dispositif de l'invention permet de traiter des substrats de grande dimension. A titre d'exemple, dans un mode de réalisation de l'invention, la source 10 est une plaquette dont le côté dans le sens de défilement, a une longueur de 10 à 15 cm et dont l'autre côté a une longueur de 45 cm. Avec une telle source, on peut traiter des substrats d'environ 30x30 cm, l'altitude de la source au-dessus du support véhiculant les substrats étant de l'ordre de 5 cm. La dimension des substrats est limitée, dans le sens perpendiculaire au défilement, par la longueur de la source suivant cette direction. En revanche, dans le sens du défilement, il n'existe pas de limitation liée au dispositif.

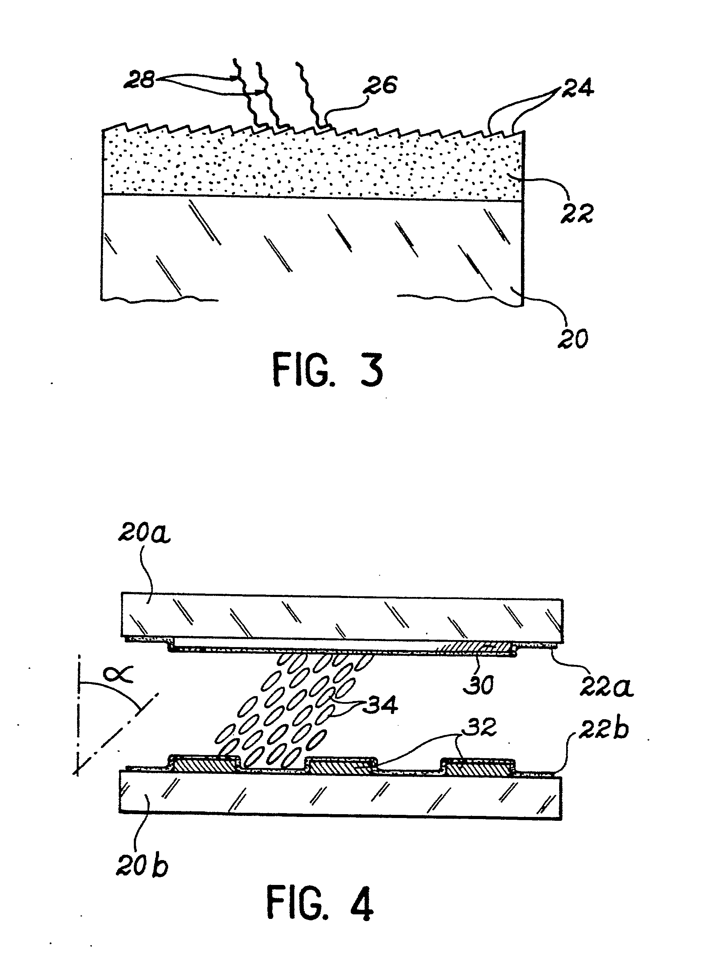

On a représenté sur la figure 3 une coupe schématique d'un substrat traité au moyen du dispositif de l'invention. Le susbtrat 20 est recouvert d'une couche d'orientation 22. Cette couche d'orientation peut être réalisée dans un matériau isolant tel que SiO, $SiO_2$, $Al_2O_3$. Elle peut être aussi réalisée dans un matériau conducteur tel que $In_2O_3$ ou NiCr si on désire graver les électrodes dans la couche d'orientation. L'épaisseur de cette couche est de l'ordre de 150 à 750 nm. Cette couche 22 peut être représentée comme étant constituée d'une superposition de couches, chacune déposée sous une incidence particulière, l'incidence de dépôt de chaque couche croissant d'un angle $\theta_1$ à un angle $\theta_2$ de la première couche à la dernière couche déposée. La représentation de la surface 24 obtenue illustre l'orientation des corps constituant la surface du substrat. Cette représentation n'est bien sûr qu'un modèle et ne prétend pas être une photographie de la réalité.

La deuxième étape connue du procédé de traitement d'un substrat pour induire une orientation quasi-homéotrope de molécules de cristal liquide consiste à recouvrir la surface 24 de ce substrat d'un surfactant, organique ou non, ou d'un agent de couplage de surface. A titre d'exemple, on va décrire le procédé connu, de dépôt d'une couche monomoléculaire de DMOAP sur le substrat. Le substrat est d'abord plongé dans une solution aqueuse de DMOAP pendant 20 minutes. Cette solution aqueuse contient typiquement 0,1% de DMOAP. Le substrat est ensuite rincé à l'eau distillée pendant 20 minutes, puis séché à température ambiante. Il est enfin chauffé à 130°C pendant 20 minutes. On a représenté sur la figure 3 une molécule de DMOAP adsorbée sur la surface 24. La partie 26 de cette molécule fixée sur la surface 24 comprend und groupement tripropyl lié à un atome de silicium. La partie 28 est composée d'une chaîne carbonée octadecyl. C'est l'orientation de cette chaîne qui induit une orientation quasi-homéotrope des molécules de cristal liquide.

Sur la figure 4, on a représenté une coupe schématique d'une cellule à cristal liquide. Le substrat 20a forme la paroi supérieure de la cellule. Sur sa face intérieure, sont disposées des électrodes parallèles telles que l'électrode 30 visible en coupe longitudinale. Une couche d'orientation 22a déposée au moyen due dispositif de l'invention recouvre la surface interne de ce substrat 20a. L'autre paroi de la cellule est constituée de la même manière d'un substrat 20b sur lequel sont disposées des électrodes parallèles 32 visibles en coupe transversale, la surface de ce substrat 20b étant recouverte d'une couche d'orientation 22b obtenue déposée au moyen du dispositif de l'invention. Une couche d'agent de couplage (non représentée) recouvre chaque couche d'orientation.

On a représenté entre ces deux substrats, des molécules de cristal liquide 34 ayant une orientation quasi-homéotrope. L'angle $\alpha$ d'inclinaison de ces molécules par rapport à la normale aux parois de la cellule a été exagéré pour la clarté du dessin. En fait, cet angle est en pratique compris entre 1 et 10°. Il est souvent de 1° ou 2°.

## Revendications

1. Dispositif de dépôt d'une couche d'orientation sur le substrat (2) d'une cellule à cristal liquide, pour induire une orientation quasi-homéotrope des molécules de cristal liquide caractérisé en ce qu'il comprend un support (14) linéaire plan apte à recevoir un ensemble de substrats (2) alignés suivant un axe d'alignement et une source (10) de pulvérisation cathodique disposée au-dessus dudit support et centrée sur ledit axe d'alignement, lesdits substrats et ladite source étant animés d'un mouvement relatif de translation suivant ledit axe d'alignement pendant le dépôt de la couche d'orientation, ledit mouvement faisant varier continûment l'angle d'incidence des particules déposées en chaque point d'un substrat dans un intervalle contenant l'incidence normale.

2. Dispositif selon la revendication 1, caractérisé en ce que la source de pulvérisation cathodique est étendue dans une direction parallèle au plan du support et perpendiculaire à l'axe d'alignement.

3. Dispositif selon l'une quelconque des revendications 1 et 2, caractérisé en ce que le mouvement relatif de translation est continu.

4. Dispositif selon l'une quelconque des revendications 1 à 3, caractérisé en ce que le mouvement relatif de translation est un mouvement à vitesse constante.

5. Dispositif selon l'une quelconque des revendications 1 à 4, caractérisé en ce que la source de pulvérisation cathodique est fixe.

6. Dispositif selon la revendication 5, caractérisé en ce qu'il comprend un tapis roulant (12) dont le plan supérieur constitue le support.

7. Dispositif selon l'une quelconque des revendications 1 à 4, caractérisé en ce que les substrats sont fixes et la source de pulvérisation cathodique mobile.

## Patentansprüche

1. Vorrichtung zum Abscheiden einer Orientierungsschicht auf dem Substrat (2) einer Flüssigkristallzelle zur Hervorrufung einer quasi-homeotropen Orientierung der Flüssigkristallmoleküle, dadurch gekennzeichnet, daß sie einen linearen, ebenen Träger (14) aufweist, der dazu eingerichtet ist, eine Gruppe von Substraten (2) aufzunehmen, die in einer Ausrichtungsachse ausgerichtet sind, und eine Kathodenzerstäubungsquelle (10) aufweist, die über dem genannten Träger angeordnet und auf die genannte Ausrichtungsachse zentriert ist, wobei die genannten Substrate und der genannte Träger in einer translatorischen Relativbewegung in der genannten Ausrichtungsachse während der Abscheidung der Orientierungsschicht angetrieben sind, welche Bewegung den Auftreffwinkel der niedergeschlagenen Partikel an jedem Punkt eines Substrats in einem Intervall, das das senkrechte Auftreffen enthält, kontinuierlich variiert.

2. Vorrichtung nach Anspruch 1, dadurch gekennzeichnet, daß die Kathodenzerstäubungsquelle in einer Richtung parallel zur Transportebene und senkrecht zur Ausrichtungsachse erstreckt ist.

3. Vorrichtung nach einem der Ansprüche 1 und 2, dadurch gekennzeichnet, daß die translatorische Relativbewegung kontinuierlich ist.

4. Vorrichtung nach einem der Ansprüche 1 bis 3, dadurch gekennzeichnet, daß die translatorische Relativbewegung eine Bewegung mit konstanter Geschwindigkeit ist.

5. Vorrichtung nach einem der Ansprüche 1 bis 4, dadurch gekennzeichnet, daß die Kathodenzerstäubungsquelle fest ist.

6. Vorrichtung nach Anspruch 5, dadurch gekennzeichnet, daß sie ein Förderband (12) aufweist, dessen oberes Trum den Träger darstellt.

7. Vorrichtung nach einem der Ansprüche 1 bis 4, dadurch gekennzeichnet, daß die Substrate feststehen und die Kathodenzerstäubungsquelle beweglich ist.

## Claims

1. Apparatus for the deposition of an orientation layer on the substrate (2) of a liquid crystal cell for inducing a quasi-homeotropic orientation of the liquid crystal molecules, characterized in that it comprises a planar linear support (14) able to receive a group of substrates (2) aligned in accordance with an alignment axis and a cathodic sputtering source (10) positioned above said support and centred on said alignment axis, said substrates and said source performing a relative translation movement along said alignment axis during the deposition of the orientation layer, said movement leading to a continuous variation in the incidence angle of the particles deposited at each point of a substrate in a range containing the normal incidence.

2. Apparatus according to claim 1, characterized in that the cathodic sputtering source is extended in a direction parallel to the plane of the support and perpendicular to the alignment axis.

3. Apparatus according to either of the claims 1 and 2, characterized in that the relative translation movement is continuous.

4. Apparatus according to any one of the claims 1 to 3, characterized in that the relative translation movement is a movement at a constant speed.

5. Apparatus according to any one of the claims 1 to 4, characterized in that the cathodic sputtering source is fixed.

6. Apparatus according to claim 5, characterized in that it comprises a conveyor (12), whose upper plane constitutes the support.

7. Apparatus according to any of the claims 1 to 4, characterized in that the substrates are fixed and the cathodic sputtering source is mobile.

FIG. 1a

FIG. 1b

FIG. 2a

FIG. 2b

FIG. 3

FIG. 4